# EUROPÄISCHE PATENTSCHRIFT

(11) **EP 0 549 902 B1**
(45) Veröffentlichungstag und Bekanntmachung des Hinweises auf die Patenterteilung: **31.01.1996**
(21) Anmeldenummer: 92120360.0
(22) Anmeldetag: 28.11.1992
(51) Int. Cl.: B07C 5/342, G01N 21/71

(54) **Verfahren zum Klassifizieren nichtmetallischer Stoffe**
Method for classifying non-metallic substances
Procédé de classification de substances non-métalliques

(30) Priorität: 17.12.1991 DE 4141561
(43) Veröffentlichungstag der Anmeldung: 07.07.1993
(73) Patentinhaber: STN ATLAS Elektronik GmbH, D-28305 Bremen (DE)
(72) Erfinder: Nick, Klaus-Peter, Dr., W-2807 Achim (DE)

(56) Entgegenhaltungen:
- EP-A- 0 293 983
- GB-A- 2 180 059
- GB-A- 2 234 347
- ANALYTICAL CHEMISTRY Bd. 61, Nr. 14, 15. Juli 1989, COLUMBUS US Seiten 1530 - 1533 IMASAKA ET AL 'SUPERTRONIC JET SPECTROMETRY OF CHEMICAL SPECIES LASER ABLATED FROM ORGANIC POLYMERS'

## Beschreibung

Die Erfindung betrifft ein Verfahren zum Klassifizieren nichtmetallischer Stoffe unter Verwendung eines gepulsten Laserstrahls nach dem Oberbegriff des Anspruchs 1.

Beim Recycling von Abfallstoffen, z. B. bei der Kraftfahrzeugverwertung und beim Wiederverwenden der im Kraftfahrzeugbau eingesetzten Materialien, oder bei der Müllentsorgung ist es bereits jetzt oder noch mehr in Zukunft erforderlich, eine Vielzahl von Stoffen zu klassifizieren und sortieren , um sie getrennt den weiteren Verarbeitungs- und Wiederaufbereitungsprozessen zuführen zu können.

In diesem Zusammenhang muß verdeutlicht werden, daß PKW's bereits aus über 100 kg Kunststoffen bestehen und daß dieser Anteil steigen wird, wenn die Fahrzeuge zukünftig aus kraftstoffersparenden Gründen mit geringerem Gewicht gebaut werden müssen. Soll dann der Autoschrott nicht als Sondermüll behandelt werden und zu entsprechend hohen Entsorgungskosten führen, so muß ein hoher Grad der Materialrückgewinnung erreicht werden. Dies um so mehr, da auch die Kosten zur Herstellung der Kunststoffe bereits heute den drei- bis vierfachen Preis der Stahlherstellung erreicht haben.

Geht man ferner davon aus, daß dabei über 60 % der Kunststoffe wiedergewonnen werden müssen, von dem zwar die Hälfte durch gezielte Demontage dem Recycling zugeführt werden kann, so muß zumindest dann die andere Hälfte durch geeignete Analysemethoden erkannt und sortiert werden, um sie wiederverwerten zu können.

Jedoch auch bei der "gezielten" Demontage wird ein Sortiermerkmal benötigt, da der Mensch sich nicht tausende von Teilen merken kann, um eine korrekte Sortierung zu gewährleisten.

Ferner wird bei der Müllentsorgung im zunehmenden Maße die Forderung nach dem Recycling möglichst vieler Abfallstoffe erhoben. Die Lagerung von Abfallstoffen auf Deponien wird immer mehr eingeschränkt und bei ihrer Verbrennung wird in erhöhtem Maße auf die Umweltverträglichkeit der Abgase und Verbrennungsrückstände geachtet. Somit werden auch bei der Müllentsorgung Eingangskontrollen und Selektionsverfahren erforderlich, die eine Rückführung der Abfallstoffe in geeignete Produktionsprozesse oder aber die umweltverträglichste Entsorgung durch Verbrennung oder Deponie ermöglichen.

Für die Analyse von Stoffen ist beispielsweise die Methode der laserinduzierten Emissionsspektroskopie eingesetzt worden. So ist aus der deutschen Offenlegungsschrift DE 40 04 627 bekannt, Stoffoberflächen mit Laserlichtimpulsen zu beschießen und mittels der kurzzeitig einwirkenden hohen Energie ein Plasma zu erzeugen. Dieses Plasma ist in seiner spektralen Zusammensetzung von den indirekt durch das Laserlicht angeregten atomaren Bestandteilen der verdampften Schicht abhängig. Bei metallischen Stoffen ergibt sich dabei ein Spektrum, das in besonderem Maße die Spektralkomponenten der Metallatome oder seiner Legierungsbestandteile aufweist. Diese Spektralkomponenten sind besonders signifikant und qualitativ sowie quantitativ aufgrund ihrer Intensität zumindest zu unterscheiden, wenn nicht sogar in ihrer prozentualen Zusammensetzung leicht zu messen.

Wendet man dieses Verfahren auf nichtmetallische Stoffe, z.B. Kunststoffe, an, so ist zu berücksichtigen, daß diese Stoffe alle einen molekularen und keinen atomaren Aufbau haben, wobei die Moleküle der Grundsubstanz der Kunststoffe hauptsächlich aus den Atomen Kohlenstoff C, Wasserstoff H, Stickstoff N und Sauerstoff O gebildet sind. Damit setzt sich das durch den Laserstrahl erzeugte Plasma überwiegend aus Spektrallinien dieser Atome C, H, N, O zusammen. Dabei ist es nahezu gleichgültig, gemäß welcher Strukturformel die Moleküle verschiedener Kunststoffe aufgebaut sind, denn die verschiedenen Plasmen zeigen bei den Spektrallinien der Hauptatome kaum quantitative Unterschiede. Damit sind Kunststoffe unterschiedlicher Strukturformeln mit der laserinduzierten Emissionsanalyse in einfacher Weise nicht zu unterscheiden, d.h. z.B. bei der Müllverbrennung können die im wesentlichen unschädlich verbrennenden Polyäthylene von den bei der Verbrennung insbesondere das Gift Dioxin bildende Polyvinylcloriden (PVC) nicht unterschieden werden.

Ferner werden den Kunststoffen Materialien, wie Schwefel S, Zink Zn, Calzium Ca, Silicium Si und andere, in unterschiedliche Konzentrationen zugesetzt, um ihre Materialeigenschaften zu beeinflussen. Zwar ist es auch aus der genannten deutschen Offenlegungsschrift DE 40 04 627 bekannt, Konzentrationen dieser zugesetzten Materialien mit der Laseranalyse zu bestimmen, um die Homogenität des Kunststoffes zu überwachen. Doch wenn diese Materialien gleichermaßen bei wiederverwertbaren wie auch bei den nicht wiederverwertbaren Kunststoffen eingesetzt werden und das auch noch mit wechselnden Konzentrationen, so sind sie für eine Unterscheidung von verwertbaren und nicht verwertbaren Kunststoffen völlig ungeeignet.

Die bekannten Verfahren zur Analyse von Stoffen, z.B. auch die Pyroanalyse, sind zwar zur Bestimmung der atomaren Elemente auch von nichtmetallischen Stoffen einsetzbar, erfordern jedoch einen erheblichen Aufwand an Zeit für die Analyse und zur Kalibrierung der Meßeinrichtungen, so daß sie für industriell anwendbare Selektionsverfahren ungeeignet sind.

Der Erfindung liegt daher die Aufgabe zugrunde, ein Verfahren anzugeben, mit dem nichtmetallische Stoffe, insbesondere Kunststoffe, schnell identifiziert, d.h. mit geringem Zeitaufwand qualitativ voneinander unterschieden werden können.

Die Aufgabe ist bei einem Verfahren der im Oberbegriff des Anspruchs 1 definierten Gattung erfindungsgemäß durch die Merkmale im Kennzeichenteil des Anspruchs 1 gelöst.

Das erfindungsgemäße Verfahren hat den Vorteil, daß trotz gleicher qualitativer Zusammensetzung verschiedener nichtmetallischer Stoffe diese durch die laserinduzierte Emission schnell und zuverlässig voneinander unterschieden werden können.

Durch verschiedene Untersuchungen ist bisher nachgewiesen worden, daß insbesondere in den Kunststoffen Spurenelemente enthalten sind, die sich durch Herstellung oder Verarbeitung ergeben. Als derartige Spurenelemente finden sich Silicium, Aluminium, Chrom oder ähnliche wieder, die in keiner Weise in die Moleküle des eigentlichen Kunststoffes eingebaut sind, sondern durch den Herstellungsprozeß als Spuren aufgenommen wurden. Die für die Spurenelemente charakteristischen Spektrallinien sind in dem Spektrum des durch Laser angeregten Plasma ebenfalls enthalten. Da ein oder mehrere dieser Spurenelemente nun typisch für ein Herstellungs- oder Verarbeitungsverfahren sind, charakterisieren sie damit auch in eindeutiger Weise indirekt den mit diesem Herstellungs- oder Verarbeitungsprozeß erzeugten Kunststoff. Diese Untersuchungen haben insbesondere auch gezeigt, daß die wiederverwertbaren, umweltfreundlichen Kunststoffe, z.B. die Polyäthylene, und die nicht verwertbaren, umweltschädlichen Kunststoffe, z.B. Polyvinylcloride, in grundsätzlich so unterschiedlichen Prozessen hergestellt werden, die zu entsprechend unterschiedlichen Beimengungen von Spurenelementen führen, daß eine eindeutige Klassifizierung aufgrund der Beimengungen dieser Spurenelemente durchführbar ist. Da für die Klassifizierung nur einzelne Spurenelemente detektiert werden und keine exakte Bestimmung von Konzentrationen mit entsprechend genau kalibrierten Meßeinrichtungen vorgenommen werden muß, ist dieses Verfahren nach wenigen Laserimpulsen in Bruchteilen von Sekunden abgeschlossen und mit geringstem Zeitaufwand durchführbar.

Sollten bei anderen Herstellungs- und/oder Verarbeitungsprozessen solche Beimengungen nicht anfallen, so können im Hinblick auf die Notwendigkeit des späteren Recycling gemäß Anspruch 2 solche Spurenelemente auch in geeigneten Kombinationen als sog. Tracer im Herstellungs- und/oder Verarbeitungsprozeß bewußt beigemengt werden. Diese Tracerstoffe können in sehr geringen Dosierungen eingesetzt werden, da sie für die Materialeigenschaften des Kunststoffes ohne Bedeutung sind. Da sie jedoch dann ein wesentliches Merkmal für die Recyclingfähigkeit des Kunststoffes darstellen, muß ihre Einsatzfähigkeit jedoch über lange Zeiträume gewährleistet werden können.

Eine vorteilhafte Weiterbildung des Verfahrens ergibt sich auch aus Anspruch 3. In der Kraftfahrzeugverwertung und in der Abfallwirtschaft sind die Oberflächen der zu klassifizierenden Stoffe vielfach verunreinigt. Dabei sind u.a. Fahrbahnstriche, Oele und Fette sowie Reinigungsmittel zu erwarten, deren Materialzusammensetzung bei der laserinduzierten Emissionsanalyse zu Spektrallinien führt, die sich dem Spektrum des eigentlich zu klassifizierenden Stoffes überlagern. Werden jedoch zeitlich nacheinander mehrere Laserimpulse auf die gleiche Stelle der Oberfläche gerichtet, so werden immer wieder Anteile der Oberflächenverunreinigungen oder Fahrbahnstriche verdampft und damit entfernt. Das bei jedem Laserimpuls erzeugte Plasma und damit das daraus gewonnene Linienspektrum ändert sich in dem Maße, wie die Verunreinigungen durch das Verdampfen reduziert werden. Nach einigen Laserimpulsen bleibt das Spektrum dann jedoch unveränderlich und stabil, so daß es zur Detektion der relevanten Spektrallinien und zur Klassifizierung des von den Verunreinigungen abgedeckten Stoffes ausgewertet werden kann. Da andererseits mehr als 40 Laserimpulse je Sekunde gesendet und die so erzeugten Plasmen bezüglich ihrer spektralen Zusammensetzung und Konstanz auch in Realzeit noch ausgewertet werden können, ist der Zeitaufwand auch für die Klassifizierung von Stoffen mit Oberflächenverunreinigungen sehr gering.

Eine vorteilhafte Weiterbildung des Verfahrens ergibt sich auch aus Anspruch 4. Dabei werden vor der Detektion der Spurenelemente die Spektrallinien der charakteristischen atomaren Elemente des Stoffes oder seiner Moleküle in der Strahlung des Plasma festgestellt. Diese Spektrallinien weisen als Hauptbestandteile des Stoffes eine besonders hohe Intensität auf, die die Detektion der Spurenelemente erschwert. Von der Geamtheit der gemessenen Spektrallinien wird ein selektives Spektrum der Hauptbestandteile isoliert und abgezogen, so daß von dem insgesamt erfaßten Spektrum die Spektrallinien der Spurenelemente verbleiben. Das auf diese Weise reduzierte Spektrum hat dann ein verbessertes Nutz/Störverhältnis bezüglich der Spurenelemente, deren Detektion dadurch vereinfacht und die Klassifikation des Stoffes verbessert wird.

Bei einer vorteilhaften Weiterbildung des erfindungsgemäßen Verfahrens gemäß Anspruch 5 werden die Intensitäten der zur Detektion herangezogenen Spektrallinien grob quantifiziert, d.h. gemessen und mehreren Intensitätsstufen zugeordnet, die den verfügbaren Meßbereich für Intensitäten, beispielsweise in vier Teilbereiche, unterteilen. Dadurch wird verschiedenen Herstellungs- und Verarbeitungsverfahren Rechnung getragen, von denen die Spurenelemente stets in unterschiedlicher Konzentration den hergestellten Stoffen beigemengt werden. Von besonderem Vorteil für die Klassifikation der einzelnen Stoffe ist es, eine Matrix, d.h. eine Vergleichs- oder Zuordnungstabelle zu verwenden, in der für jeden zu klassifizierenden Stoff die Intensitätsstufen der charakteristischen Spurenelemente gespeichert sind. Bei einem Vergleich der lediglich von den Spurenelementen gemessenen Spektrallinien bzw. ihrer Intensitäten mit den in der Matrix gespeicherten Intensitätsstufen läßt sich der zu untersuchende Stoff unmittelbar und sehr schnell klassifizieren. Mehrere den Stoff kennzeichnende Spurenelemente mit signifikanten Intensitätsstufungen reduzieren die Redundanz eines solchen Vergleichssystems und erhöhen dabei die Entscheidungssicherheit der Klassifizierung. Die Kunststoffe weisen also aufgrund ihrer Herstellungs- und/oder Verarbeitungsverfahren eine Kombination von Spurenelemente und Intensitätsstufungen auf, die für Herstellung und Verarbeitung eindeutig sind und damit auch den Kunststoff selbst zweifelsfrei klassifizieren, so daß diese Kombination von Spurenelementen als sog. "Fingerprints" angesehen werden können. Jedoch auch für Kunststoffe, die möglicherweise nicht so eindeutig wie Polyethylen oder Polyvinylclorid durch Spurenelemente aus ihren Herstellungsverfahren unterscheidbar sind und bei denen diese Spurenelemente als Tracer zugesetzt werden, ist eine sehr flexible Kennzeichnungsmöglichkeit gegeben. Durch die Grobquantifizierung der Intensitätsstufungen bei den Tracerstoffen und die Festlegung einer entsprechenden Matrix für diese "Fingerprints" wird eine sehr große Variationsbreite der Kennzeichnung vorgesehen, so daß eine Vielzahl unterschiedlicher Stoffe mit einer vergleichsweise geringen Zahl von Spurenelementen als Tracerstoffe eindeutig gekennzeichnet werden kann, die dann bei der späteren laserinduzierten Emissionsanalyse zweifelsfrei klassifiziert und dem sinnvollsten Recycling- oder Entsorgungsverfahren zugeführt werden können.

Der Einsatz des Verfahrens beispielsweise bei der Kraftfahrzeugverwertung ist in der Weise vorgesehen, daß eine mit der Demontage von Kraftfahrzeugen beauftragte Person an ihrem Arbeitsplatz einen Analysator für die laserinduzierte Emissionsanalyse mit einer Anzeige und einem Handgerät verfügbar hat. Das Handgerät, z.B. in Form einer Pistole, das auf die zu klassifizierende Materialprobe gerichtet wird, besitzt eine elektrische Auslösevorrichtung für den Analysator. Der Analysator weist die Laserlichtquelle auf, deren Laserimpulse über einen Quarzlichtleiter zum Handgerät geführt und von dort durch die Luftstrecke auf die Oberfläche der Materialprobe abgestrahlt wird. Die hohe Energie des Laserlichts läßt die Oberfläche des Stoffes verdampfen und wegen der hohen Temperaturen ein Plasma entstehen. Von diesem Plasma geht eine Strahlung im Wellenlängenbereich des Lichts aus, die über den Lichtleiter des Handgerätes zum Analysator zurückübertragen wird. Beim Vermessen dieser Strahlung werden Spektrallinien erzeugt, deren Wellenlängen charakteristisch für die im Plasma verdampften atomaren Elemente sind.

Die durch Herstellungs- oder Verarbeitungsverfahren beigemengten Spurenelemente sind dabei in den Stoffproben zwar nur mit sehr geringen Konzentrationen vorhanden, bilden sich aber dennoch im Spektrum der detektierbaren Intensitäten ab. Bei der Auswertung durch das Analyseprogramm des Emissionsanalysators bleiben die Hauptkomponenten der den Kunststoff bestimmenden Elemente und Moleküle unberücksichtigt, da sie insbesondere auch für alle Kunststoffe im wesentlichen in gleicher Zusammensetzung vorhanden sind. Das Ausschließen dieser Spektrallinien kann einerseits dadurch erfolgen, daß jeweils die Spektrallinien mit den größten Intensitäten bestimmt und das so definierte Teilspektrum von der gemessenen Gesamtheit der Spektrallinien abgezogen wird. Das verbleibende Restspektrum ist dann bezüglich der Spektrallinien niederer Intensität besser und schneller analysierbar, um die Wellenlänge der Spektrallinien für die relevanten Spurenelemente zu bestimmen.

Andererseits können Filter für die bekannten Spektrallinien der Hauptkomponenten von Kunststoffen bei den Wellenlängen, z.B. für Wasserstoff H, Stickstoff N, Sauerstoff O und Kohlenstoff C etc. vorgesehen sein und eingeschaltet werden, wenn die Spektrallinien höchster Intensität (innerhalb eines Wellenlängenbereiches) von Tracermaterial stammen, so daß das Restspektrum nach dem Herausfiltern der Hauptkomponenten für die eigentliche Spektralanalyse verbleibt.

Die Intensitäten der bei der Auswertung erkannten Spektrallinien der Spurenelemente werden im Analysator grob quantifiziert, indem sie mit Intensitätsschwellen verglichen werden.

In einer abgespeicherten Vergleichstabelle sind dann Kombinationen von signifikanten Spurenelementen und deren Intensitätsstufen für spezielle Herstellungs- und/oder Verabreitungsverfahren und damit für den mit diesem Verfahren erzeugten Kunststoffen festgelegt. Damit ist der Kunststoff durch Vergleich der gemessenen Intensitäten des Restspektrums mit dem gespeicherten, den Spektrallinien zugeordneten Intensitätsmustern indirekt über sein Herstellungsverfahren eindeutig zu klassifizieren.

Für diese Art der Auswertung bieten sich dann insbesondere neue Rechenverfahren von Expertensystemen mit Fuzzy-Logik an. Mit solchen Auswertesystemen kann dann der Kunststoff mit einer vorgebbaren nicht unbedingt 100%igen Wahrscheinlichkeit bestimmt werden. Bei einer derartigen Bedingung wäre dann beispielsweise zu prüfen, daß gleichzeitig Spektrallinien bestimmter Elemente mit hoher Intensität sowie Spektrallinien anderer vorgegebener Elemente mit niederer Intensität gemessen werden und einzelne Spektrallinien auf keinen Fall vorkommen.

Bei dieser Art der Klassifikation ist unerheblich, ob einzelne Materialeigenschaften der Kunststoffe übereinstimmen, wesentlich ist, daß beispielsweise bestimmte Gruppierungen von Kunststoffen unterschieden werden können, die bei Recyclingprozessen unter keinen Umständen vermengt werden dürfen. Deshalb leistet das Verfahren keine exakte Analyse der Materialkomponenten der Stoffe, sondern bewirkt eine Klassifikation molekularer Komponenten indirekt aufgrund atomarer Elemente ihrer Erzeugungsprozesse, die sich durch Verunreinigungen oder Tracerstoffe dem zu klassifizierenden Stoff aufprägen.

## Patentansprüche

1. Verfahren zum Klassifizieren von nichtmetallischen Stoffen, insbesondere zwecks Sortieren und/oder Selektieren für den Recyclingprozeß, bei welchem die Stoffoberfläche partiell einem gepulsten Laserstrahl ausgesetzt und dadurch ein Plasma erzeugt wird und die Spektrallinien der von dem Plasma ausgehenden Strahlung zur Unterscheidung der Stoffe herangezogen werden, dadurch gekennzeichnet, daß diejenigen Spektrallinien, die für Atome oder Moleküle des zu Klassifizierenden Stoffes charakteristisch sind, von der Detektion ausgeschlossen und nur Spektrallinien detektiert werden, die von im Stoff enthaltenen Spurenelementen verursacht werden, und daß die Klassifizierung aufgrund von mindestens einer der detektierten Spektrallinien vorgenommen wird.

2. Verfahren nach Anspruch 1, dadurch gekennzeichnet, daß die Spurenelemente als sog. Tracer dem Stoff beim Herstellungs- und/oder Verarbeitungsprozeß beigemengt werden.

3. Verfahren nach einem der Ansprüche 1 oder 2, dadurch gekennzeichnet, daß die Stoffoberfläche mit mehreren Laserimpulsen nacheinander beaufschlagt wird, und daß die Detektion der Spektrallinien erst erfolgt, wenn das Spektrum sich stabilisiert hat, d. h. über mehrere, zeitlich aufeinanderfolgende Messungen unverändert geblieben ist.

4. Verfahren nach einem der Ansprüche 1 bis 3, dadurch gekennzeichnet, daß die Spektrallinien der für den Stoff oder seine Moleküle charakteristischen atomaren Elemente selektiert und von dem erfaßten Spektrum abgezogen werden.

5. Verfahren nach einem der Ansprüche 1 bis 4, dadurch gekennzeichnet, daß eine Grobquantifizierung in Intensitätsstufen der zur Detektion herangezogenen Spektrallinien durchgeführt wird und daß die Klassifizierung des Stoffes durch Vergleich mit einer Zuordnungstabelle erfolgt, in der für die Stoffe oder Klassen von Stoffen die möglichen Spurenelemente mit ihren Intensitätsstufen gespeichert sind.

## Claims

1. Method for classifying non-metallic substances, in particular for the purpose of sorting and/or selecting for the recycling process, in which method the surface of the substance is partially exposed to a pulsed laser beam, as a result of which a plasma is formed, and the spectral lines of the radiation issuing from the plasma are used to differentiate between the substances, characterised in that those spectral lines which are characteristic of atoms or molecules of the substance to be classified are excluded from the detection and only those spectral lines formed by trace elements contained in the substance are detected; and that the classification is conducted on the basis of at least one of the detected spectral lines.

2. Method according to Claim 1, characterised in that the trace elements are mixed into the substance as so-called tracers during the production and/or treatment process.

3. Method according to one of Claims 1 or 2, characterised in that the surface of the substance is subjected to several laser pulses one after the other; and that detection of the spectral lines is only carried out when the spectrum has stabilised, i.e. has remained unchanged over several successive measurements.

4. Method according to one of Claims 1 to 3, characterised in that the spectral lines of the atomic elements characteristic of the substance or its molecules are selected and withdrawn from the detected spectrum.

5. Method according to one of Claims 1 to 4, characterised in that the spectral lines used for detection are roughly quantified into stages in intensity; and that the substance is classified by comparison with a cross-reference list, in which the possible trace elements for the substances or classes of substances are stored with their stages in intensity.

## Revendications

1. Procédé de classification de substances non métalliques et notamment en vue d'un tri et/ou d'une sélection pour le procédé de recyclage, selon lequel on soumet partiellement la surface des substances à un faisceau laser pulsé et on produit de ce fait un plasma, et on utilise les raies spectrales du rayonnement émis par le plasma, pour différencier les substances, caractérisé en ce que les raies spectrales, qui sont caractéristiques pour des atomes ou des molécules de la substance à classer, sont exclues de la détection et que seules sont détectées les raies spectrales, qui sont produites par des éléments à l'état de traces contenus dans la substance, et que la classification est réalisée sur la base d'au moins l'une des raies spectrales détectées.

2. Procédé selon la revendication 1, caractérisé en ce qu'on ajoute des éléments à l'état de traces, à savoir ce qu'on appelle des traceurs, à la substance lors du procédé de fabrication et/ou de traitement.

3. Procédé selon l'une des revendications 1 ou 2, caractérisé en ce qu'on charge successivement la surface de la substance par plusieurs impulsions laser et que la détection des raies spectrales s'effectue uniquement lorsque le spectre s'est stabilisé, c'est-à-dire est resté inchangé pendant plusieurs mesures qui se succèdent dans le temps.

4. Procédé selon l'une des revendications 1 à 3, caractérisé en ce que des raies spectrales des éléments atomiques caractéristiques pour la substance ou ses molécules sont sélectionnées et retirées du spectre détecté.

5. Procédé selon l'une des revendications 1 à 4, caractérisé en ce qu'on exécute une quantification grossière, selon des échelons d'intensité, des raies spectrales utilisées pour la détection et que la classification de la substance s'effectue par comparaison à un tableau d'association, dans lequel les éléments possibles à l'état de trace sont mémorisés, avec leurs échelons d'intensité, pour les substances ou les classes de substances.
